(19) Europäisches Patentamt
European Patent Office
Office européen des brevets

(11) **EP 4 524 879 B1**

(12) **EUROPEAN PATENT SPECIFICATION**

(45) Date of publication and mention
of the grant of the patent:
**01.04.2026 Bulletin 2026/14**

(51) International Patent Classification (IPC):
***G06T 5/50*** (2006.01)

(52) Cooperative Patent Classification (CPC):
**G06T 5/50;** G06T 2207/20104; G06T 2207/30128

(21) Application number: **24199510.9**

(22) Date of filing: **10.09.2024**

(54) **APPARATUS FOR ACQUIRING IMAGE AND ELECTRONIC DEVICE INCLUDING THE SAME**

VORRICHTUNG ZUR ERFASSUNG EINES BILDES UND ELEKTRONISCHES GERÄT MIT EINER SOLCHEN VORRICHTUNG

APPAREIL D'ACQUISITION D'IMAGE ET DISPOSITIF ÉLECTRONIQUE LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.09.2023 KR 20230122662**

(43) Date of publication of application:
**19.03.2025 Bulletin 2025/12**

(73) Proprietor: **Samsung Electronics Co., Ltd Suwon-si, Gyeonggi-do 16677 (KR)**

(72) Inventors:
• **Kim, Hojung**
 **16678 Suwon-si, Gyeonggi-do (KR)**
• **Kim, Unjeong**
 **16678 Suwon-si, Gyeonggi-do (KR)**
• **Lee, Suyeon**
 **16678 Suwon-si, Gyeonggi-do (KR)**

(74) Representative: **Grünecker Patent- und Rechtsanwälte**
**PartG mbB**
**Leopoldstraße 4**
**80802 München (DE)**

(56) References cited:
**US-A1- 2019 370 586     US-A1- 2020 396 397**

**Description**

BACKGROUND

1. Field

The present disclosure relates generally to image capture, and more particularly, to an apparatus for acquiring images and an electronic device including the apparatus.

2. Description of Related Art

The chemical and/or physiological state of an object may be determined by analyzing spectral data of the object. For example, measurements such as, but not limited to, cholesterol and/or blood glucose levels may be obtained by analyzing spectral data of blood samples. As another example, information on the nutrients and/or freshness of food items may be determined by analyzing spectral data of the food items.

US 2020/396397 A1 refers to a multispectral image processing system and method. The image processing comprises obtaining an N-channel (e.g., multispectral) input image, determining fusion weights and fallback weights (e.g., relative intensity weights) for each of the N-channels of the input image, blending the fusion and fallback weights based on an amount of gradient information to generate blended weights, modulating the blended weights for a plurality of frequency band representations of the input image, applying the modulated blended weights to the corresponding frequency band representations of the input image to generate a plurality of output image frequency band representations, producing an output luma image, based on the plurality of output image frequency band representations, and generating an output RGB image, based on the output luma image.

US 2019/370586 A1 refers to data processing device, data processing method, program, and electronic device. An imaging system comprises a multispectral camera configured to capture a multispectral image of an object, an RGB camera configured to capture a color image of the object, at least one storage device configured to store spectrum information for each of a plurality of labeled objects, and processing circuitry. The processing circuitry is configured to determine, based on the captured multispectral image, spectrum information associated with the object, associate, based at least in part, on the spectrum information associated with the object and the stored spectrum information for each of the plurality of objects, a label with the color image of the object, and store, on the at least one storage device, the color image and the associated label as training data.

SUMMARY

According to embodiments of the present invention, there is provided an apparatus for analyzing spectral data and outputting analysis results as image data.

The invention is what is claimed in the independent claims. Preferred embodiments are specified in the dependent claims.

According to an aspect of the present disclosure, an apparatus for acquiring images includes a multispectral sensor configured to sense light reflected from an object, one or more processors, and a memory storing instructions that, when executed by the one or more processors, cause the apparatus to generate N channel images based on signals obtained from a plurality of channels of the multispectral sensor, N being a positive integer greater than zero, select at least one first channel image corresponding to a visible wavelength band from among the N channel images, generate a reference image based on the at least one first channel image, select a second channel image from remaining channel images of the N channel images, the remaining channel images corresponding to remaining channels of the plurality of channels of the multispectral sensor distinct from first channels corresponding to the at least one first channel image, generate object information by analyzing the second channel image, combine the reference image and the object information to generate an output image, and display the output image to a user.

According to an aspect of the present disclosure, an electronic device for acquiring images includes a multispectral sensor configured to sense light reflected from an object, an input unit configured to receive a user input, a display, a processor configured to generate and display an output image on the display based on a multispectral signal received from the multispectral sensor and an input signal received from the input unit, and a memory storing instructions that, when executed by the processor, cause the electronic device to generate N channel images based on the multispectral signal obtained from a plurality of channels of the multispectral sensor, N being a positive integer greater than zero, select at least one first channel image corresponding to a visible wavelength band from among the N channel images, generate a reference image based on the at least one first channel image, select a second channel image from remaining channel images of the N channel images, the remaining channel images corresponding to remaining channels of the plurality of channels of the multispectral sensor distinct from first channels corresponding to the at least one first channel image, generate object information by analyzing the second channel image, and generate the output image by combining the reference image with the object information.

Additional aspects may be set forth in part in the description which follows and, in part, may be apparent from the description, and/or may be learned by practice of the presented embodiments.

BRIEF DESCRIPTION OF THE DRAWINGS

The above and other aspects, features, and advantages of certain embodiments of the disclosure may be more apparent from the following description taken in conjunction with the accompanying drawings, in which:

FIG. 1 is a diagram schematically illustrating a cross-section of a multispectral sensor, according to an embodiment;
FIG. 2 is a diagram illustrating a multispectral sensor applicable to an image acquisition apparatus, according to an embodiment;
FIG. 3 is a block diagram schematically illustrating a configuration of an image acquisition apparatus, according to an embodiment;
FIG. 4 is a diagram illustrating a wavelength spectrum of a red-green-blue (RGB) sensor, according to an embodiment;
FIGS. 5 and 6 are diagrams illustrating wavelength spectra of a multispectral sensor, according to embodiments;
FIG. 7 is a block diagram illustrating a configuration of an image acquisition apparatus, according to an embodiment;
FIG. 8 is a diagram illustrating a process of generating channel images based on signals obtained through channels of a multispectral sensor, according to an embodiment;
FIG. 9 is a flowchart illustrating an image acquisition method, according to an embodiment;
FIG. 10 is a block diagram illustrating a configuration of an electronic device, according to an embodiment;
FIG. 11 is a block diagram schematically illustrating a camera module provided in the electronic device shown in FIG. 10, according to an embodiment;
FIGS. 12 and 13 illustrate various examples of electronic devices to which an image acquisition apparatus may be applied, according to embodiments;
FIGS. 14 and 15 are diagrams illustrating a mobile device configured to provide information on the composition or state of an object to be measured, according to an embodiment; and
FIGS. 16 and 17 are diagrams illustrating a method of operating a mobile device, according to an embodiment.

DETAILED DESCRIPTION

Reference may now be made in detail to embodiments, examples of which are illustrated in the accompanying drawings, wherein like reference numerals may refer to like elements throughout. In this regard, the present embodiments may have different forms and may not be construed as being limited to the descriptions set forth herein. Accordingly, the embodiments are merely described below, by referring to the figures, to explain aspects. As used herein, the term "and/or" includes any and all combinations of one or more of the associated listed items.

The terms used in the disclosure are general terms currently widely used in the art in consideration of functions regarding embodiments, but the terms may vary according to the intention of those of ordinary skill in the art, precedents, or new technology in the art. Also, some terms may be arbitrarily selected, and in this case, the meaning of the selected terms may be described in the detailed description of the present disclosure. Thus, the terms used herein may not be construed based on only the names of the terms but may be construed based on the meaning of the terms together with the description throughout the disclosure.

In the following descriptions of embodiments, when a portion or element is referred to as being connected and/or coupled to another portion or element, the portion or element may be directly connected to the other portion or element, or may be electrically connected to the other portion or elements with intervening portions or elements being therebetween. It may be further understood that the terms "comprises" and/or "comprising" used herein specify the presence of stated features or elements, but do not preclude the presence or addition of one or more other features or elements.

In the following descriptions of the embodiments, expressions or terms such as "constituted by," "formed by," "include," "comprise," "including," and "comprising" may not be construed as always including all specified elements, processes, or operations, but may be construed as not including some of the specified elements, processes, or operations, or further including other elements, processes, or operations.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

The terms "upper," "middle", "lower", and the like may be replaced with terms, such as "first," "second," third" to be used to describe relative positions of elements. The terms "first," "second," third" may be used to describe various elements but the elements are not limited by the terms and a "first element" may be referred to as a "second element". Alternatively or additionally, the terms "first", "second", "third", and the like may be used to distinguish components from each other and do not limit the present disclosure. For example, the terms "first", "second", "third", and the like may not necessarily involve an order or a numerical meaning of any form.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of exemplary approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

The following descriptions of the embodiments may not be construed as limiting the scope of the disclosure, and modifications or changes that could be easily made from the embodiments by those of ordinary skill in the art may be construed as being included in the scope of the disclosure. Hereinafter, embodiments may be described with reference to the accompanying drawings.

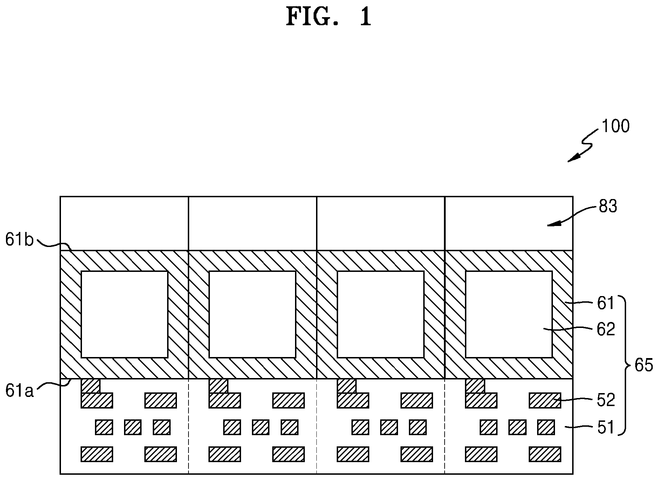

FIG. 1 is a diagram schematically illustrating a cross-section of a multispectral sensor 100, according to an embodiment.

Referring to FIG. 1, the multispectral sensor 100 may be and/or may include, for example, a complementary metal oxide semiconductor (CMOS) image sensor or a charge coupled device (CCD) image sensor.

As shown in FIG. 1, the multispectral sensor 100 may include a pixel array 65 and a spectral filter 83 provided on the pixel array 65. The pixel array 65 may include a plurality of pixels that may be arranged in a two-dimension (2D) array, and the spectral filter 83 may include a plurality of resonators respectively corresponding to the plurality of pixels of the pixel array 65. Although FIG. 1 illustrates an example in which the pixel array 65 includes four (4) pixels and the spectral filter 83 includes four (4) resonators, the present disclosure is not limited in this regard. That is, a number of pixels in the pixel array 65 and a number of resonators in the spectral filter may vary (e.g., lower, higher, different) based on various factors such as design constraints without departing from the scope of the disclosure.

Each of the pixels of the pixel array 65 may include a photodiode 62 that may be a photoelectric conversion element, and a driving circuit 52 that may be configured to drive the photodiode 62. The photodiode 62 may be embedded in a semiconductor substrate 61. For example, the semiconductor substrate 61 may be and/or may include a silicon (Si) substrate. However, the present disclosure is not limited thereto, and the semiconductor substrate 61 may include other materials. A wiring layer 51 may be provided on a lower surface 61a of the semiconductor substrate 61, and the driving circuit 52 may be provided in the wiring layer 51. The driving circuit 52 may be and/or may include a metal oxide semiconductor field effect transistor (MOSFET).

The spectral filter 83 including the plurality of resonators may be provided on an upper surface 61b of the semiconductor substrate 61. Each of the resonators may transmit light in a specific wavelength range. Each of the resonators may include reflective layers that may be apart from each other, and cavities may be provided between the reflective layers. Each of the reflective layers may include, for example, a metallic reflective layer and/or a Bragg reflective layer. Each of the cavities may resonate light in the specific wavelength range.

The spectral filter 83 may include at least one functional layer that may improve transmittance of the spectral filter 83 for light passing through the spectral filter 83 and incident on the photodiodes 62. The at least one functional layer may include a dielectric layer and/or a dielectric pattern having an adjusted refractive index. Alternatively or additionally, the at least one functional layer may include, but not be limited to, an antireflection layer, a condensing lens, a color filter, a short-wavelength absorption filter, a long-wavelength blocking filter, and the like. However, the present disclosure is not limited in this regard, and the at least one functional layer may include other filters and/or lenses.

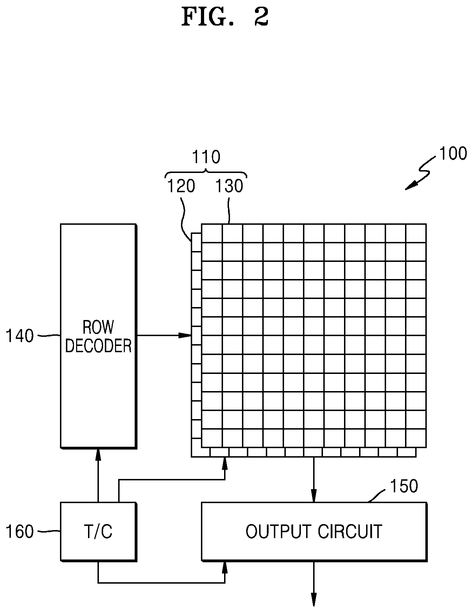

FIG. 2 is a diagram illustrating a multispectral sensor 100 applicable to an image acquisition apparatus, according to an embodiment.

The multispectral sensor 100 of FIG. 2 may include and/or may be similar in many respects to the multispectral sensor 100 described with reference to FIG. 1, and may include additional features not mentioned above. Consequently, repeated descriptions of the multispectral sensor 100 described above with reference to FIG. 1 may be omitted for the sake of brevity.

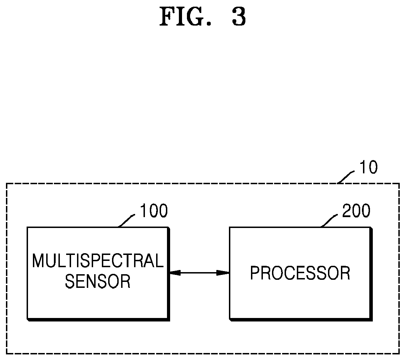

According to an embodiment, the multispectral sensor 100 shown in FIG. 2 may be applied to an image acquisition apparatus (e.g., an image acquisition apparatus described with reference to FIG. 3), and an electronic device including the image acquisition apparatus.

Referring to FIG. 2, the multispectral sensor 100 may include a pixel array 110, a timing controller 160, a row decoder 140, and an output circuit 150.

The pixel array 110 of the multispectral sensor 100 may be and/or may include a 2D array in which a plurality of pixels are arranged. Each of the pixels may include a plurality of subpixels arranged in an n×n array for sensing light in wavelength bands having different center wavelengths, where n is a positive integer greater than or equal to three (3).

In an embodiment, the pixel array 110 may be provided by combining a sensing unit 120 and a spectral filter 130 with each other. Although FIG. 2 illustrates the sensing unit 120 and the spectral filter 130 forming the pixel array 110 as being separated from each other, the present disclosure is not limited thereto. For example, the pixel array 110 may be provided by integrating the sensing unit 120 and the spectral filter 130 in a stacked structure. The sensing unit 120 may have sensing regions corresponding to the arrangements of the pixels and the sub-pixels of the pixel array 110. The spectral filter 130 may have a 2D array of filter regions configured to transmit light in wavelength bands having different center wavelengths according to the subpixel arrangement of each pixel.

The row decoder 140 may select one or more rows of the pixel array 110 in response to a row address signal output from the timing controller 160. The output circuit 150 may output light sensing signals on a column basis from a plurality of pixels arranged in the selected row. To this end, the output circuit 150 may include a column decoder and an analog-to-digital converter (ADC). For example, the output circuit 150 may include a plurality of ADCs that may be respectively arranged between the column decoder and the pixel array 110 for columns. As another example, the output circuit 150 may include an ADC arranged at an output terminal of the column decoder. The timing controller 160, the row decoder 140, and the output circuit 150 may be implemented as one chip and/or as separate chips. A processor for processing an image signal output through the output circuit 150 may be implemented as a single chip together with the timing controller 160, the row decoder 140, and the output circuit 150. Each of the pixels of the pixel array 110 may include a plurality of subpixels configured to sense light having different center wavelength regions as described above, and the subpixels may be variously arranged.

FIG. 3 is a block diagram schematically illustrating a configuration of an image acquisition apparatus 10, according to an embodiment.

Referring to FIG. 3, the image acquisition apparatus 10 includes the multispectral sensor 100 and a processor 200. FIG. 3 illustrates only elements of the image acquisition apparatus 10 that are related to the current embodiment. Therefore, it is to be understood that the image acquisition apparatus 10 may include other elements in addition to the elements shown in FIG. 3. The image acquisition apparatus 10 further includes memory. Alternatively or additionally, the image acquisition apparatus 10 may further include other elements other than the memory.

The multispectral sensor 100 of FIG. 3 may include and/or may be similar in many respects to the multispectral sensor 100 described with reference to FIGS. 1 and 2, and may include additional features not mentioned above. Consequently, repeated descriptions of the multispectral sensor 100 described above with reference to FIGS. 1 and 2 may be omitted for the sake of brevity.

The multispectral sensor 100 may be a sensor configured to sense light in various wavelength bands. For example, the multispectral sensor 100 may sense light in more wavelength bands than a red-green-blue (RGB) sensor (e.g., visible wavelength bands).

The multispectral sensor 100 may sense light in a wavelength band that has shorter and/or longer wavelengths than a visible wavelength band. For example, the multispectral sensor 100 may sense light in an ultraviolet wavelength band having shorter wavelengths than a visible light wavelength band. As another example, the multispectral sensor 100 may sense light in an infrared wavelength band having longer wavelengths than a visible light wavelength band.

In an embodiment, the multispectral sensor 100 may include a plurality of co-located spectral sensors and each of the spectral sensors may sense light in a predetermined wavelength band.

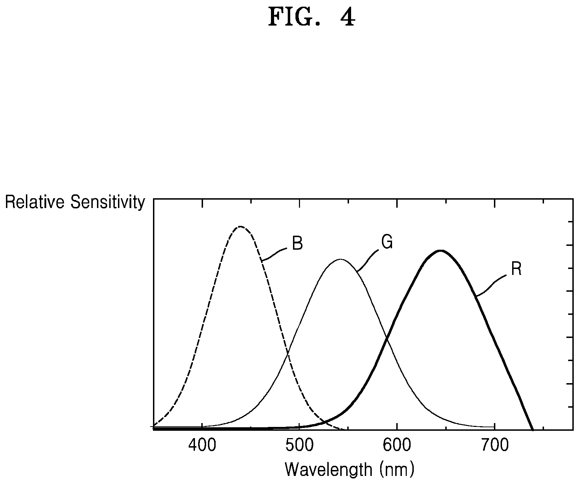

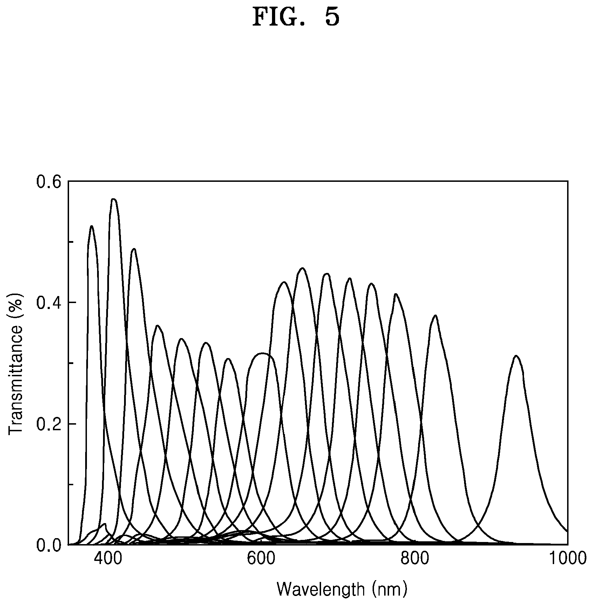

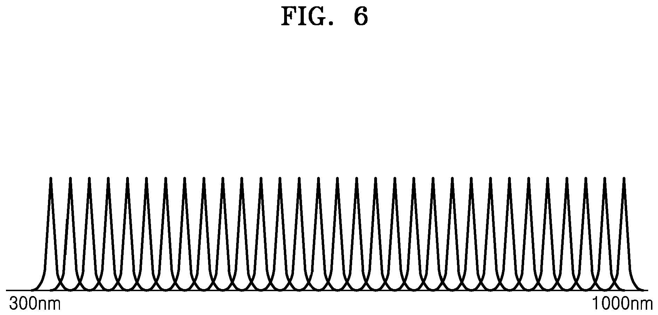

Referring to FIG. 4, an RGB sensor may include a red (R) channel, a green (G) channel, and a blue (B) channel, and may sense light in wavelength bands corresponding to the these channels. For example, as shown in FIG. 4, the RGB sensor may detect red light in a wavelength band (channel) having a center wavelength of about 650 nanometers (nm), green light in a channel having a center wavelength of about 540 nm, and blue light in a channel having a center wavelength of about 440 nm. Unlike the RGB sensor, the multispectral sensor 100 may include more than three channels (e.g., 16 or 31) that sense wavelength bands other than the wavelength bands sensed by the RGB sensor, as shown in FIGS. 5 and 6. For example, FIG. 5 illustrates a multispectral sensor having 16 wavelength bands (channels) with center wavelengths ranging from about 300 nm to about 950 nm. As another example, FIG. 6 illustrates a multispectral sensor having 31 wavelength bands (channels) with center wavelengths ranging from about 300 nm to about 1000 nm. However, the present disclosure not limited thereto. For example, the multispectral sensor 100 may include a plurality of channels that have more channels and/or less channels that the number of channels depicted in FIGS. 5 and 6.

The multispectral sensor 100 may adjust the center wavelength, bandwidth, and transmission amount of light absorbed through each channel such that each channel may sense light in a desired band. An image acquired by the multispectral sensor 100 may be referred to as a multispectral image and/or a hyperspectral image. The multispectral sensor 100 may acquire images by dividing a relatively wide wavelength band, including a plurality of wavelength bands, such as, but not limited to, a visible light wavelength band, an infrared wavelength band, an ultraviolet wavelength band, and the like, into a plurality of channels.

The processor 200 controls the overall operation of the image acquisition apparatus 10. The processor 200 may include one processor core (single core) and/or a plurality of processor cores (multi-core). The processor 200 may process and/or execute programs and/or data stored in a memory. For example, the processor 200 may control functions of the image acquisition apparatus 10 by executing the programs stored in the memory.

The processor 200 generates N channel images based on signals obtained through the channels of the multispectral sensor 100, where N is a positive integer greater than zero (0). The processor 200 may generate a reference image by selecting a first channel image corresponding to a visible wavelength from the N channel images. The processor 200 selects a second channel image that may not overlap the first channel image in terms of channels and analyzes the second channel image to generate specific information. The processor 200 selects the second channel image from remaining channel images corresponding to remaining channels of the plurality of channels of the multispectral sensor distinct from channels corresponding to the first channel image. The processor 200 generates an output image by combining the reference image and the specific information with each other.

The processor 200 analyzes spectral data on a measurement-target object photographed by the multispectral sensor 100 to derive information about the chemical and/or physiological state of the measurement-target object. For example, the processor 200 may provide information on the nutrients of food by analyzing spectral data on the food.

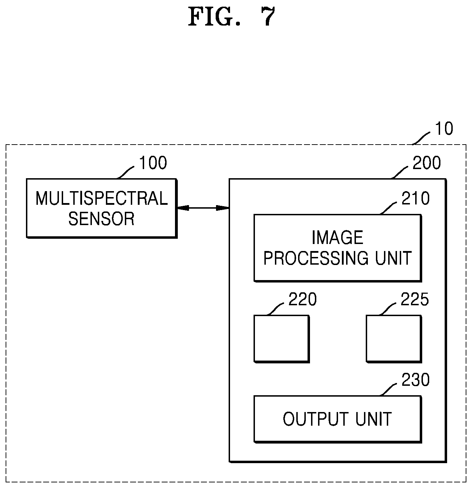

In an embodiment, the processor 200 may generate specific information (e.g., object information of the measurement-target object) based on pixel values included in a region of interest of the second channel image. In an optional or additional embodiment, the processor 200 may generate specific information by extracting edges from the second channel image. Hereinafter, the image acquisition apparatus 10 is described with reference to FIGS. 7 to 9.

Referring to FIG. 7, the image acquisition apparatus 10 may include the multispectral sensor 100 and the processor 200. The image acquisition apparatus 10 of FIG. 7 may include and/or may be similar in many respects to the image acquisition apparatus 10 described above with reference to FIG. 3, and may include additional features not mentioned above. Furthermore, the multispectral sensor 100 and the processor 200 of FIG. 7 may include and/or may be similar in many respects to multispectral sensor 100 and the processor 200 described above with reference to FIG. 3, and may include additional features not mentioned above. Consequently, repeated descriptions of the image acquisition apparatus 10 of FIG. 7 described above with reference to FIGS. 1 to 6 may be omitted for the sake of brevity.

The processor 200 may include an image processing unit 210, a reference image generation unit 220, an image analysis unit 225, and an output unit 230. For ease of illustration, the image processing unit 210, the reference image generation unit 220, the image analysis unit 225, and the output unit 230 are separated from each other according to operations of the processor 200. However, this separation does not necessarily imply physical separation. The image processing unit 210, the reference image generation unit 220, the image analysis unit 225, and the output unit 230 may each correspond to any combination of hardware and/or software included in the processor 200, and may be physically identical to each other or different from each other.

Circuitry (e.g., the wiring layer 51 and/or the driving circuit 52 described with reference to FIG. 1) included in the multispectral sensor 100 may be the same as or different from circuitry of the processor 200. When the circuitry included in the multispectral sensor 100 is the same as that of the processor 200, the image acquisition apparatus 10 may be implemented as an on-chip device that includes the functionality of the multispectral sensor 100 and the processor 200. Alternatively or additionally, when the circuitry included in the multispectral sensor 100 is different from that of the processor 200, the image acquisition apparatus 10 may be implemented as an on-chip device that includes the functionality of the multispectral sensor 100 and the processor 200. However, the present disclosure is not limited thereto, and the processor 200 may be separately provided outside the multispectral sensor 100.

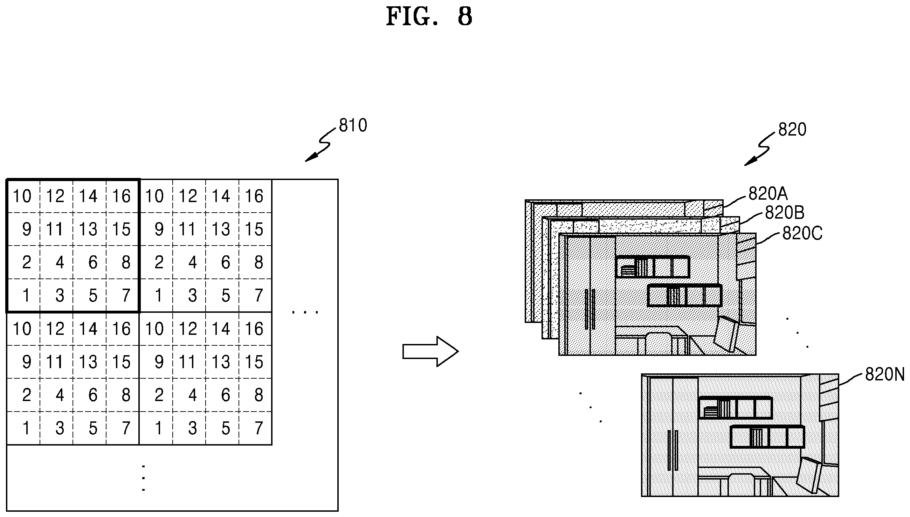

The image processing unit 210 may generate N channel images by demosaicing signals obtained through a plurality of channels of the multispectral sensor 100. FIG. 8 is a diagram illustrating a process of generating channel images based on signals obtained through the channels of the multispectral sensor 100, according to an embodiment.

FIG. 8 illustrates a raw image 810 acquired using the multispectral sensor 100 and N channel images 820 (e.g., first channel image 820A, second channel image 820B, third channel image 820C, to N-th channel image 820N) acquired by demosaicing. In the raw image 810, each small square may refer to a pixel, and a number written in each square may refer to a channel number. It may be understood from the channel numbers depicted in FIG. 8 that the raw image 810 is an image acquired using a multispectral sensor 100 having 16 channels (e.g., N = 16). In an example shown in FIG. 8, sixteen (16) spectral images are acquired through first to 16th channels. However, the present disclosure is not limited in this regard, and the multispectral sensor 100 may have less channels (e.g., N < 16) and/or more channels (e.g., N > 16) without departing from the scope of the present disclosure. The raw image 810 includes all pixels corresponding to different channels, and the N channel images 820 may be each generated by collecting pixels of each channel through demosaicing. For example, first channel image 820A may comprise the pixels corresponding to a first channel (e.g., channel 1) of the multispectral sensor 100, second channel image 820B may comprise the pixels corresponding to a second channel (e.g., channel 2) of the multispectral sensor 100, third channel image 820C may comprise the pixels corresponding to a third channel (e.g., channel 3) of the multispectral sensor 100, and N-th channel image 820N may comprise the pixels corresponding to an N-th channel (e.g., channel 16) of the multispectral sensor 100. However, the present disclosure is not limited in this regard, and the N channel images 820 may correspond to different channels of the multispectral sensor 100.

Returning to FIG. 7, the reference image generation unit 220 may generate a reference image by selecting at least one first channel image from the N channel images 820. The reference image may be provided to a user and may be referred to as a channel image in a visible wavelength band that humans may see. The at least one first channel image may include one or more channels. For example, the at least one first channel image may include a combination of one or more of a red (R) channel image, a green (G) channel image, and a blue (B) channel image. In an embodiment, the reference image may be and/or may include a visible light image (e.g., an RGB image) that may provide information on the texture of an object to a user.

The image analysis unit 225 may generate specific information on the measurement-target object by selecting a second channel image that not overlap the at least one first channel image in terms of channels from the N channel images 820, and may analyze the second channel image. For example, the image analysis unit 225 may select the second channel image from remaining channel images corresponding to remaining channels of the plurality of channels of the multispectral sensor 100 distinct from channels corresponding to the first channel image. The specific information may be generated only for a region of interest of the measurement-target object.

The image analysis unit 225 may select the second channel image based on an application example of the object. The application example may be and/or may include an example of providing information about the chemical and/or physiological state of the object derived from spectral data on the object.

For example, when the object is a food item, the application example may include the freshness of the food, the content of a specific nutrient in the food, and/or whether the food is spoiled. As another example, when the object is a blood sample, the application example may include the level of blood cholesterol and/or a blood sugar level. In an embodiment, the application example may be selected by a user of the image acquisition apparatus 10. For example, before the image acquisition apparatus 10 receives an optical signal reflected by a material included in the object, a user may select one of a plurality of preset application examples stored in the image acquisition apparatus 10 by using a user interface (UI) or the like.

A wavelength band in which the object absorbs or reflect light may vary depending on the electronic structure of atoms and/or molecules constituting the material of the object. For example, a user may select the anthocyanin content of the object as one of application examples through the UI or the like. In such an example, based on the user selection, the image analysis unit 225 may select a second channel image corresponding to the absorption wavelength band and/or reflection wavelength band of anthocyanin.

In an embodiment, the image analysis unit 225 may calculate specific information based on pixel values included in at least one region of interest of the second channel image. A plurality of pixels may be included in the at least one region of interest, and thus, the average value of pixel values included in the at least one region of interest may be calculated as the specific information on the at least one region of interest. The pixel values may be values normalized with respect to all pixel values of the second channel image.

For example, as shown in Equation 1, the pixel values may be normalized using a min-max normalization method and may be rearranged in a common range of 0 to 100.

$$Normalized\ pixel\ value \qquad\qquad \text{[Eq. 1]}$$

$$= \frac{pixel\ value - minimum\ pixel\ value}{maximum\ pixel\ value - minimum\ pixel\ value}$$

$$\times\ 100$$

When the image analysis unit 225 selects a second channel image corresponding to the reflection wavelength band of anthocyanin, the pixel values of the second channel image may be proportional to the amount of anthocyanin, and normalized pixel values may be output as the amount of anthocyanin. Since normalized pixel values are used, the amount of anthocyanin may refer to a relative amount of anthocyanin and not to an absolute amount of anthocyanin in the object.

When the image analysis unit 225 selects a second channel image corresponding to the absorption wavelength band of anthocyanin, a relatively larger amount of anthocyanin may result in relatively smaller pixel values of the second channel image, and thus, the image analysis unit 225 may invert the normalized pixel values and output the inverted normalized pixel values as the amount of anthocyanin. For example, when pixel values are normalized using the min-max normalization method similar to Equation 1, a value obtained by subtracting a normalized pixel value from 100 (e.g., 100 - normalized pixel value) may be output as the amount of anthocyanin. Since the normalized value is used, the amount of anthocyanin may refer to a relative amount of anthocyanin and not to an absolute amount of anthocyanin in the object.

In an optional or additional embodiment, the image analysis unit 225 may generate specific information by extracting edges from the second channel image using an edge detection filter. Examples of a method of detecting an edge region using an edge detection filter may include a method of extracting an edge region using an edge extraction filter such as, but not limited to, a Sobel operator, a Canny edge detector, a Laplacian filter, and the like.

For example, when an application example relates to internal characteristics of an object (e.g., a fruit having an internal rotten portion or a fruit having an internal portion eaten by an insect), the image analysis unit 225 may select a second channel image corresponding to a wavelength band (e.g., a near-infrared wavelength band) in which light travels to the inside of the object. When the specific information generated by the image analysis unit 225 includes edges extracted from the second channel image in a wavelength band in which light travels to the inside of the object, internal characteristics of the object that may be difficult to detect in a visible-light image may be included in the specific information.

The output unit 230 may combine the reference image and the specific information with each other to generate an output image.

The output unit 230 may apply an edge gain to the edge region extracted from the second channel image to emphasize the edge region, and may reflect the emphasized edge region in the reference image to generate an edge-emphasized image.

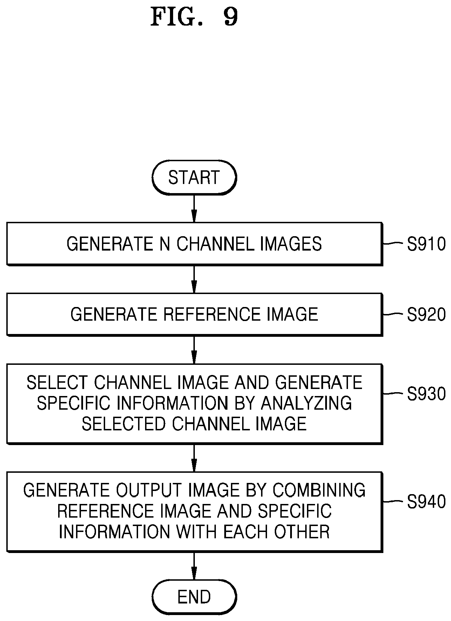

FIG. 9 is a flowchart illustrating an image acquisition method, according to the present invention.

Referring to FIG. 9, the image acquisition method of the present invention includes operations that are performed by the image acquisition apparatus 10 described with reference to FIGS. 2 and 7. Therefore, descriptions given above with reference to FIGS. 1 to 8, which may not be presented with reference to FIG. 9, may be applied to the image acquisition method shown in FIG. 9.

In operation S910, an image acquisition apparatus 10 generates N channel images 820 by demosaicing signals acquired through a plurality of channels of a multispectral sensor 100.

In operation S920, the image acquisition apparatus 10 selects at least one first channel image corresponding to a visible wavelength from the N channel images and may generate a reference image based on the at least one first channel image. For example, the at least one first channel image may include a combination of one or more of a red (R) channel image, a green (G) channel image, and a blue channel image, which are selected from the N channel images. The reference image may be and/or may include a visible-light image (e.g., an RGB image) providing information on the texture of an object to a user.

In operation S930, the image acquisition apparatus 10 selects a second channel image that may not overlap the at least one first channel image in terms of channels from the N channel images and may analyze the second channel image to generate specific information. The image acquisition apparatus 10 selects the second channel image from remaining channel images corresponding to remaining channels of the plurality of channels of the multispectral sensor 100 distinct from channels corresponding to the first channel image. In an embodiment, the image acquisition apparatus selects the second channel image based on an application example of the object. The application example is an example of providing information about the chemical state and/or physiological state of the object derived from spectral data on the object. When the image acquisition apparatus 10 is used for application for scanning produce (such as fruits and vegetables) or assessing the quality of produce, the application may prompt a user to capture an image of fruits or vegetables, and process the (raw) image using the image acquisition apparatus 10. In this application, the image acquisition apparatus 10 may select three (3) images corresponding to red, green, and blue channel from a plurality of spectral images within the raw image. Additionally, the image acquisition apparatus 10 may combine the three images to create an RGB reference image. The image acquisition apparatus 10 may obtain a special image at 540 nm and another spectral image at 760 nm from the plurality of spectral images to infer relative anthocyanin values and relative flavonoid values of the fruits, respectively, with reference to the RGB reference image.

In an embodiment, the image acquisition apparatus may calculate the specific information based on pixel values included in at least one region of interest of the second channel image. The average value of pixel values included in the at least one region of interest of the second channel image may be calculated as the specific information. The pixel values may be normalized with respect to all pixel values of the second channel image. In an embodiment, the image acquisition apparatus may generate the specific information by extracting edges from the second channel image using an edge detection filter.

In operation S940, the image acquisition apparatus may generate an output image by combining the reference image and the specific information with each other. For example, the image acquisition apparatus may apply an edge gain to an edge region extracted from the second channel image to emphasize the edge region, and may reflect the emphasized edge region in the reference image to generate an edge-emphasized image. In the context of scanning produce or evaluating produce quality, the image acquisition apparatus may highlight the edge regions of the fruits, enabling users to easily identify them.

The image acquisition method described above may be recorded on a non-transitory computer-readable recording medium in which one or more programs including instructions for executing the image acquisition method are recorded. Examples of the non-transitory computer-readable recording medium may include, but not be limited to, magnetic media (e.g., hard disks, floppy disks, and magnetic tapes), optical recording media (e.g., compact disc read-only memories (CD-ROMs) and digital versatile discs (DVDs)), magneto-optical media (e.g., floptical disks), and memory devices and/or hardware (e.g., read-only memories (ROMs), random access memories (RAMs), and flash memories), that may be configured to store program instructions and/or execute the program instructions. Examples of the program instructions may include, but not be limited to, machine code generated by compilers and/or high-level language code executable on computing devices using interpreters.

The image acquisition apparatus 10 described with reference to FIGS. 2 and 7 may be employed in various high-performance optical devices or high-performance electronic devices. Examples of the electronic devices may include, but not be limited to, smartphones, cellular phones, personal digital assistants (PDAs), laptops, personal computers (PCs), various portable devices, home appliances, digital cameras, automobiles, Internet of Things (IoT) devices, and other mobile and/or non-mobile computing devices.

The electronic devices further includes a processor, such as an application processor (AP), configured to control an image sensor provided therein, and may run an operating system and/or application programs using the processor to control a plurality of hardware and/or software components and perform various data processing operations and calculations. The processor may further include a graphics processing unit (GPU) and/or an image signal processor (ISP). When the processor includes an ISP, images acquired using the image sensor may be stored and/or output through the processor. In additional or optional embodiments, the processor may include circuitry like a central processing unit (CPU), a memory protection unit (MPU), an AP, a central processor (CP), a System-on-a-Chip (SoC), or an integrated circuit (IC).

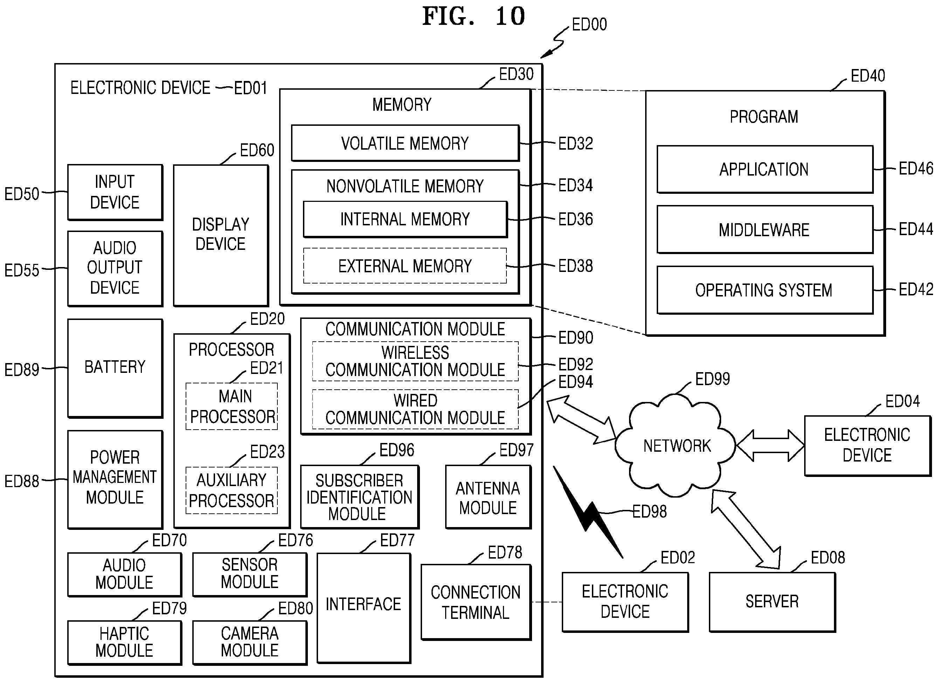

FIG. 10 is a block diagram including a configuration of an electronic device ED01, according to an embodiment.

Referring to FIG. 10, in a network environment ED00, the electronic device ED01 may communicate with another electronic device ED02 through a first network ED98 (e.g., a near-field wireless communication network or the like) and/or may communicate with another electronic device ED04 and/or a server ED08 through a second network ED99 (e.g., a far-field wireless communication network or the like). The electronic device ED01 may communicate with the electronic device ED04 through the server ED08.

The electronic device ED01 may include a processor ED20, a memory ED30, an input device ED50, an audio output device ED55, a display device ED60, an audio module ED70, a sensor module ED76, an interface ED77, a haptic module ED79, a camera module ED80, a power management module ED88, a battery ED89, a communication module ED90, a subscriber identification module ED96, and/or an antenna module ED97. The number and arrangement of components of the network environment ED00 shown in FIG. 10 are provided as an example. In practice, there may be additional components, fewer components, different components, or differently arranged components than those shown in FIG. 10. Furthermore, some of the components (e.g., the display device ED60, and the like) may be omitted from the electronic device ED01, and/or other components may be added to the electronic device ED01. Some of the components may be implemented in one integrated circuit. For example, the sensor module ED76 (e.g., a fingerprint sensor, an iris sensor, an illuminance sensor, and the like) may be embedded in the display device ED76 (e.g., a touchscreen display and/or the like).

The processor ED20 may execute software, such as a program ED40 or the like, to control one or more other components (e.g., hardware or software components, and the like) connected to the processor ED20, and may perform a variety of data processing and/or operations. As a portion of the data processing and/or operations, the processor ED20 may load instructions and/or data received from other components (e.g., the sensor module ED76, the communication module ED90, and the like) into a volatile memory ED32, process the instructions and/or data stored in the volatile memory ED32, and store result data in a nonvolatile memory ED34. The processor ED20 may include a main processor ED21 (e.g., a CP, an AP, and the like) and an auxiliary processor ED23 (e.g., a GPU, an ISP, a sensor hub processor, a communication processor, and the like), which may be operated independently and/or together with the main processor ED21. In an embodiment, the auxiliary processor ED23 may consume less power than the main processor ED21 and may perform specialized functions.

The auxiliary processor ED23 may control functions and/or states related to some (e.g., the display device ED60, the sensor module ED76, the communication module ED90, and the like) of the components of the electronic device ED01 on behalf of the main processor ED21 while the main processor ED21 is in an inactive (e.g., sleep) state and/or together with the main processor ED21 while the main processor ED21 is in an active (e.g., application execution) state. The auxiliary processor ED23 may be implemented as a portion of other functionally relevant components (e.g., the camera module ED80, the communication module ED90, and the like).

The memory ED30 may store a variety of data needed by the components (e.g., the processor ED20, the sensor module ED76, and the like) of the electronic device ED01. The data may include, but not be limited to, software (e.g., the program ED40, and the like) and input data and/or output data for commands related thereto. The memory ED30 may include the volatile memory ED32 and/or the nonvolatile memory ED34. The nonvolatile memory ED32 may include an internal memory ED36 fixed to the electronic device ED01 and an external memory ED38 removable from the electronic device ED01.

The program ED40 may be stored as software in the memory ED30, and may include an operating system ED42, middleware ED44, and/or an application ED46.

The input device ED50 may receive commands and/or data to be used for the components (e.g., the processor ED20, and the like) of the electronic device ED01 from the outside (e.g., a user, a surrounding environment, and the like) of the electronic device ED01. The input device ED50 may include, but not be limited to, a microphone, a mouse, a keyboard, a digital pen (e.g., a stylus pen or the like), a button, a switch, a camera, a virtual reality (VR) headset, haptic gloves, and the like.

The audio output device ED55 may output an audio signal to the outside of the electronic device ED01. The audio output device ED55 may include a speaker a receiver, a speaker, a buzzer, an alarm, and the like. The speaker may be used for general purposes such as multimedia playback or record playback, and the receiver may be used to receive incoming calls. The receiver may be provided as a portion of the speaker and/or may be implemented as a separate device.

The display device ED60 may visually provide information to the outside of the electronic device ED01. The display device ED60 may include a display (e.g., a liquid crystal display (LCD), light-emitting diodes (LEDs), organic light emitting diodes (OLEDs)), a hologram device, a projector, and the like. The display device ED60 may include a control circuit for controlling devices. The display device ED60 may include touch circuitry set to sense a touch, and/or sensor circuitry (e.g., a pressure sensor, and the like) configured to measure the intensity of force generated by the touch.

The audio module ED70 may convert sound into an electrical signal, and vice versa. The audio module ED70 may obtain sound through the input device ED50, or may output sound through the audio output device ED55 and/or speakers and/or headphones of another electronic device (e.g., the electronic device ED02 or the like) directly or wirelessly connected to the electronic device ED01.

The sensor module ED76 may detect an operating state (e.g., power consumption, temperature level, and the like) of the electronic device ED01 or an external environmental state (e.g., user status, brightness level, time of day, geographic location, and the like), and may generate an electrical signal and/or a data value corresponding to the detected state. The sensor module ED76 may include, but not be limited to, a gesture sensor, a gyroscopic sensor, an accelerometer, a barometric sensor, a magnetic sensor, an acceleration sensor, a grip sensor, a proximity sensor, a color sensor, an infrared (IR) sensor, a biological sensor, a temperature sensor, a humidity sensor, an illuminance sensor, an actuator, a transducer, a contact sensor, a ranging device, a global positioning system (GPS) sensor, and the like.

The interface ED77 may support one or more designated protocols, which may be used to directly (e.g., via a physical connection) and/or wirelessly connect the electronic device ED01 with other electronic devices (e.g., the electronic device ED02, and the like). The interface ED77 may include, but not be limited to, a high definition multimedia interface (HDMI), a universal serial bus (USB) interface, a secure digital (SD) card interface, and/or an audio interface.

A connection terminal ED78 may include a connector through which the electronic device ED01 may be physically connected to other electronic devices (e.g., the electronic device ED02, and the like). The connection terminal ED78 may include an HDMI connector, a USB connector, an SD card connector, and/or an audio connector (e.g., a headphone connector, and the like).

The haptic module ED79 may convert an electrical signal into a mechanical stimulus (e.g., vibration, movement, and the like) or an electrical stimulus that a user may perceive through tactile sensation and/or kinesthesia. The haptic module ED79 may include, but not be limited to, a motor, a piezoelectric element, an electric stimulation device, and the like.

The camera module ED80 may capture a still image and/or a moving image. The camera module ED80 may include the image acquisition apparatus 10 described above, and may further include, but not be limited to, a lens assembly, an ISP, and/or a flash. The lens assembly included in the camera module ED80 may collect light coming from an object to be imaged.

The power management module ED88 may manage power supplied to the electronic device ED01. The power management module ED88 may be implemented as a portion of a power management integrated circuit (PMIC).

The battery ED89 may supply power to components of the electronic device ED01. The battery ED89 may include, but not be limited to, a non-rechargeable primary battery, a rechargeable secondary battery, and/or a fuel cell.

The communication module ED90 may support establishment of a direct (wired) communication channel and/or a wireless communication channel between the electronic device ED01 and other electronic devices (e.g., the electronic device ED02, the electronic device ED04, the server ED08, and the like), and may support communication through the established communication channel. The communication module ED90 may operate independently of the processor ED20 and may include one or more communication processors supporting direct communication and/or wireless communication. The communication module ED90 may include a wireless communication module ED92 (e.g., a cellular communication module (e.g., fifth generation (5G), long-term evolution (LTE), code division multiple access (CDMA), and the like), a short-range wireless communication module (e.g., FlashLinQ, WiMedia, Bluetooth™, Bluetooth™ Low Energy (BLE), ZigBee, Institute of Electrical and Electronics Engineers (IEEE) 802.11x (Wi-Fi), and the like), a global navigation satellite system (GNSS), or the like) and/or a wired communication module ED94 (e.g., a local area network (LAN) communication module, a power line communication module, a IEEE 1094 (FireWire) module, and the like). A corresponding communication module from among these communication modules may communicate with other electronic devices through the first network ED98 (e.g., a local area network such as Bluetooth™, Wi-Fi Direct, infrared data association (IrDA), and the like) and/or the second network ED99 (e.g., a telecommunication network such as a cellular network, the Internet, or computer networks (e.g., LAN, wide-area network (WAN), and the like)). These various types of communication modules may be integrated into a single component (e.g., a single chip or the like) and/or may be implemented as a plurality of separate components (e.g., multiple chips). The wireless communication module ED92 may identify and authenticate the electronic device ED01 within a communication network (e.g., the first network ED98 and/or the second network ED99) using subscriber information (e.g., an international mobile subscriber identifier (IMSI), and the like) stored in the subscriber identity module ED96.

The antenna module ED97 may transmit and/or receive signals and/or power to and/or from the outside (e.g., other electronic devices, and the like). An antenna may include a radiator made of a conductive pattern formed on a substrate (e.g., a printed circuit board (PCB), and the like). The antenna module ED97 may include one or more such antennas. When a plurality of antennas are included in the antenna module ED97, the communication module ED90 may select an antenna suitable for a communication method used in a communication network (e.g., the first network ED98 and/or the second network ED99) from among the plurality of antennas. Signals and/or power may be transmitted and/or received between the communication module ED90 and other electronic devices through the selected antenna. Other components (e.g., a radio-frequency integrated circuit (RFIC), and the like) in addition to the antenna may be included as part of the antenna module ED97.

Some of the components may be connected to each other and exchange signals (e.g., commands, data, and the like) through a communication method between peripheral devices (e.g., a bus, general purpose input and output (GPIO), a serial peripheral interface (SPI), a mobile industry processor interface (MIPI), and the like).

Commands and/or data may be transmitted and/or received between the electronic device ED01 and an external apparatus (e.g., the electronic device ED04 through the server ED08 connected to the second network ED99). The other electronic devices ED02 and ED04 may be the same as and/or may be different from the electronic device ED01. All or some of the operations of the electronic device ED01 may be executed by one or more of the other electronic devices ED02, ED04, and ED08. For example, when the electronic device ED01 needs to perform certain functions or services, the electronic device ED01 may request one or more other electronic devices to perform some or all of the functions or services instead of directly executing the functions or services. One or more other electronic devices that have received the request may execute an additional function or service related to the request, and may transfer results of the execution to the electronic device ED01. To this end, cloud computing, distributed computing, and/or client-server computing techniques may be used.

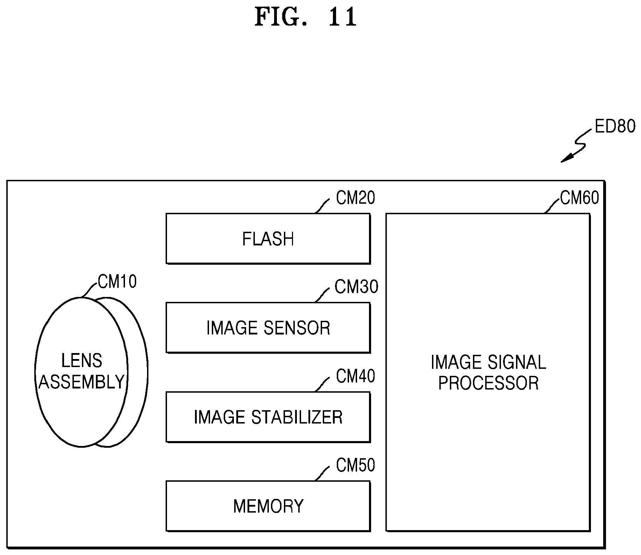

FIG. 11 is a block diagram schematically illustrating the camera module ED80 included in the electronic device ED01 shown in FIG. 10.

The camera module ED80 may include the image acquisition apparatus 10 described above, and/or may have a structure modified therefrom. Referring to FIG. 11, the camera module ED80 may include a lens assembly CM10, a flash CM20, an image sensor CM30, an image stabilizer CM40, a memory CM50 (e.g., a buffer memory, and the like), and/or an image signal processor CM60.

The image sensor CM30 may include the image acquisition apparatus 10 and/or the multispectral sensor 100. The multispectral sensor 100 may obtain an image corresponding to an object by converting light emitted and/or reflected from the object, which may be transmitted through the lens assembly CM10, into an electrical signal. The multispectral sensor 100 may obtain a hyperspectral image in an ultraviolet-to-infrared wavelength range and/or an RGB image corresponding to a visible wavelength band.

In an embodiment, the image sensor CM30 may further include one or more sensors selected from image sensors having different properties, such as another RGB image sensor, a black and white (BW) sensor, an infrared sensor, and/or an ultraviolet sensor. Each sensor included in the image sensor CM30 may be implemented as a CCD sensor and/or a CMOS sensor.

The lens assembly CM10 may collect light coming from an object to be imaged. The camera module ED80 may include a plurality of lens assemblies CM10, and in this case, the camera module ED80 may be and/or may include a dual camera, a 360-degree camera, and/or a spherical camera. Some of the plurality of lens assemblies CM10 may have the same lens properties (e.g., field of view, focal length, autofocus, F number, optical zoom, and the like) and/or may have different lens properties. Each of the lens assemblies CM10 may include a wide-angle lens and/or a telephoto lens.

However, the present disclosure is not limited thereto.

The flash CM20 may emit artificial light to enhance light emitted and/or reflected from an object. The flash CM20 may include, but not be limited to, one or more light emitting diodes (e.g., an RGB LED, a white LED, an infrared LED, an ultraviolet LED, and the like), and/or a xenon lamp.

The image stabilizer CM40 may move one or more lenses included in the lens assembly CM10 and/or the image sensor CM30 in a specific direction in response to a movement of the camera module ED80 and/or the electronic device ED01 including the camera module ED80. Alternatively or additionally, the image stabilizer CM40 may control operating characteristics of the image sensor CM30 (e.g., adjustment of read-out timing, and the like) to compensate for negative effects caused by movement. The image stabilizer CM40 may detect a movement of the camera module ED80 and/or the electronic device ED01 by using a gyroscopic sensor and/or an acceleration sensor that may be arranged inside and/or outside the camera module ED80. The image stabilizer CM40 may be and/or may include an optical image stabilizer.

Some or all of data obtained through the multispectral sensor 100 may be stored in the memory CM50 for the next image processing operation. The memory CM50 may include and/or may be similar in many respects to the memory described with reference to FIG. 3. For example, when a plurality of images are obtained at a high speed, the obtained original data (e.g., Bayer-patterned data, high-resolution data, and the like) may be stored in the memory CM50 and only a low-resolution image may be displayed. The original data of a selected image (e.g., user selection, and the like) may be transferred to the image signal processor CM60. The memory CM50 may be integrated into the memory ED30 of the electronic device ED01 and/or may be configured as a separate memory that may be independently operated.

The image signal processor CM60 may perform one or more image processes on an image obtained through the image sensor CM30 and/or image data stored in the memory CM50. The image signal processor CM60 may include and/or may be similar in many respects to the processor 200 described with reference to FIGS. 2 to 7. The image signal processor CM60 may perform one or more image processes that may include, but not be limited to, depth map generation, three-dimensional (3D) modeling, panorama generation, feature point extraction, image synthesis, image compensation (e.g., noise reduction, resolution adjustment, brightness adjustment, blurring, sharpening, softening, and the like), and the like. The image signal processor CM60 may control components (e.g., the image sensor CM30, and the like) included in the camera module CM80. For example, the image signal processor CM60 may perform at least one of exposure time control, read-out timing control, and the like.

An image processed by the image signal processor CM60 may be stored in the memory CM50 for additional processing and/or may be provided to external components (e.g., the memory ED30, the display device ED60, the electronic device ED02, the electronic device ED04, the server ED08, and the like) of the camera module ED80. The image signal processor CM60 may be integrated into the processor ED20 and/or may be configured as a separate processor that may operate independently of the processor ED20. When the image signal processor CM60 is provided separately from the processor ED20, an image processed by the image signal processor CM60 may be displayed on the display device ED60 after being further processed by the processor ED20.

The electronic device ED01 may include a plurality of camera modules ED80 having different attributes and/or functions. For example, at least one of the plurality of camera modules ED80 may be and/or may include a wide-angle camera. As another example, at least one of the plurality of camera modules ED80 may be and/or may include a telephoto camera. In some embodiments, at least one of the plurality of camera modules ED80 may be and/or may include a front camera and/or a rear camera.

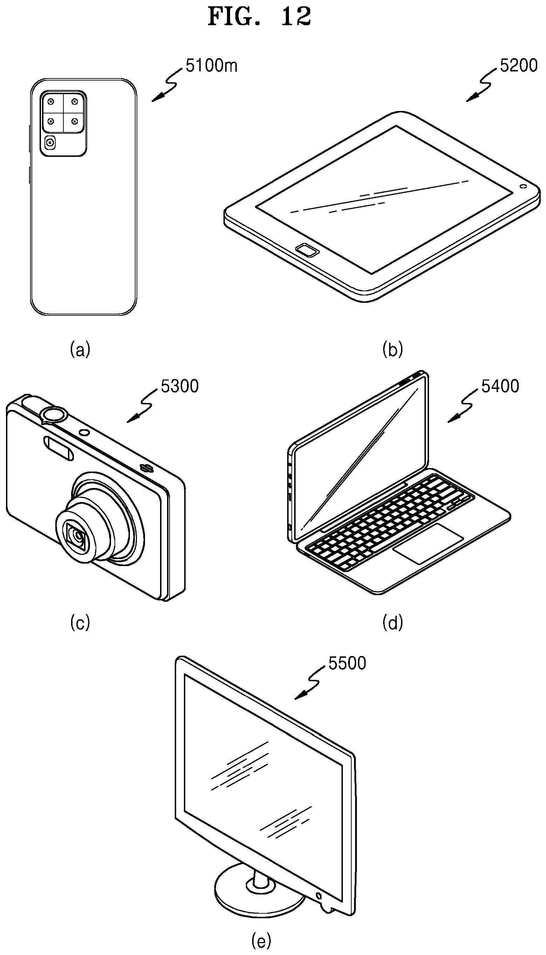

According to some embodiments, the image acquisition apparatus 10 may be applied to a mobile phone and/or smartphone 5100m as shown in (a) of FIG. 12, a tablet and/or smart tablet 5200 as shown in (b) of FIG. 12, a digital camera and/or camcorder 5300 as shown in (c) of FIG. 12, a laptop computer 5400 as shown in (d) of FIG. 12, and/or a television and/or smart television 5500 as shown in (e) of FIG. 12. For example, referring to (a) and (b) of FIG. 12, the smartphone 5100m and/or the smart tablet 5200 may include a plurality of high-resolution cameras each having a high-resolution image sensor mounted thereon. The high-resolution cameras may be used to extract depth information of objects in an image, adjust out of focus of an image, and/or automatically identify objects in an image.

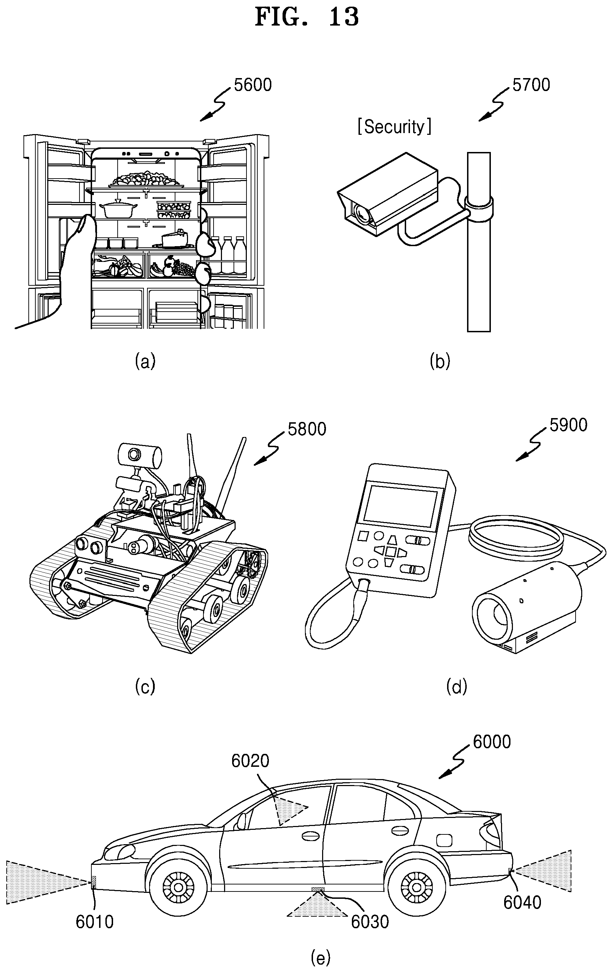

In optional or additional embodiments, the image acquisition apparatus 10 may be applied to a smart refrigerator 5600 as shown in (a) of FIG. 13, a security camera 5700 as shown in (b) FIG. 13, a robot 5800 as shown in (c) of FIG. 13, a medical camera 5900 as shown in (d) of FIG. 13, and the like. For example, referring to (a) FIG. 13, the smart refrigerator 5600 may automatically recognize food contained in the smart refrigerator 5600 by using the image acquisition apparatus 10, and may inform a user of whether a specific food is contained in the smart refrigerator 5600, the type of food put into or out of the smart refrigerator 5600, and the like. In an embodiment, the smart refrigerator 5600 may inform the user through a smartphone. Referring to (b) of FIG. 13, the security camera 5700 may provide an ultra-high-resolution image and may recognize an object or a person in the ultra-high-resolution image even in a dark environment owing to high sensitivity of the security camera 5700. Referring to (c) of FIG. 13, the robot 5800 may be sent to a disaster area and/or an industrial site that may not be directly accessible by humans and may provide high-resolution images. Referring to (d) of FIG. 13, the medical camera 5900 may provide a high-resolution image for diagnosis and/or surgery, and may have a dynamically adjustable field of view.

Referring to (e) of FIG. 13, the image acquisition apparatus 10 may be applied to a vehicle 6000. The vehicle 6000 may include a plurality of vehicle cameras (e.g., first vehicle camera 6010, second vehicle camera 6020, third vehicle camera 6030, and fourth vehicle camera 6040) arranged at various positions. Each of the vehicle cameras 6010 to 6040 may include the image acquisition apparatus 10, according to an embodiment. The vehicle 6000 may use the vehicle cameras 6010 to 6040 to provide a driver with various information about the interior and/or surroundings of the vehicle 6000, and may provide information necessary for autonomous driving by automatically recognizing objects and/or people in images.

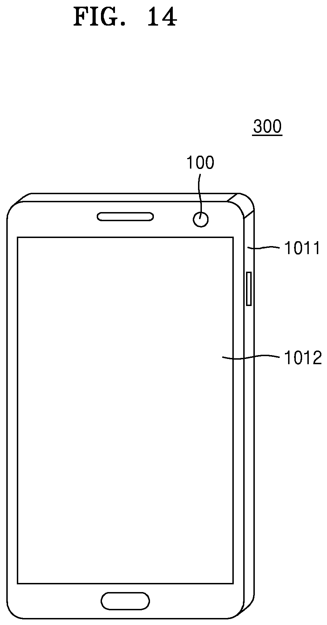

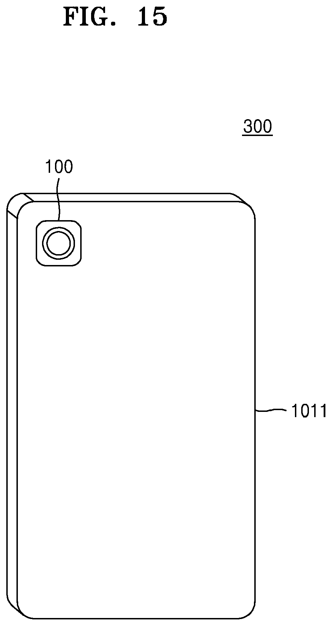

FIGS. 14 and 15 are diagrams illustrating a mobile device 300 configured to provide information on the composition or state of an object to be measured, according to an embodiment.

Components of the mobile device 300 that are related to the current embodiment are shown in FIGS. 14 and 15. It is to be understood that the mobile device 300 may further include other general-purpose components in addition to the components shown in FIGS. 14 and 15.

Referring to FIGS. 14 and 15, the mobile device 300 may be and/or may include a smartphone. The mobile device 300 may include a main body case 1011 having a front side and a rear side, and a display 1012 may be provided on the front side of the mobile device 300. The display 1012 may include touch circuitry configured to detect a touch, and/or a sensor circuit (e.g., a pressure sensor) configured to measure the magnitude of force generated by the touch.

The image acquisition apparatus 10 described with reference to FIGS. 2 and 7 may be implemented in the mobile device 300, and the multispectral sensor 100 may be implemented on the front side of the mobile device 300 as shown in FIG. 14, and/or the rear side of the mobile device 300 as shown in FIG. 15.

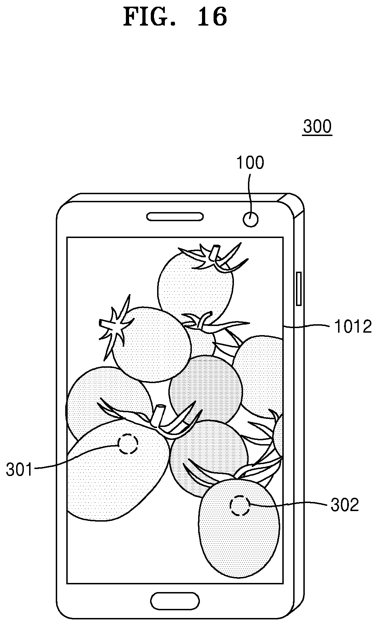

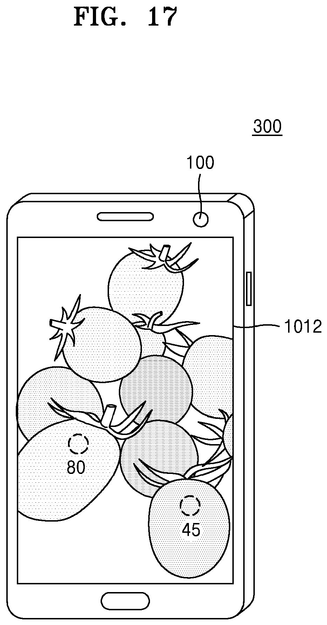

FIGS. 16 and 17 are diagrams illustrating a method of operating the mobile device 300, according to an embodiment.

Referring to FIG. 16, the mobile device 300 may display a reference image on the display 1012. The reference image may be a visible-light image (e.g., an RGB image) and may provide information on the texture of objects (e.g., tomatoes) to a user.

The user may select, using a UI or the like, one of a plurality of application examples that may be predetermined and stored in the image acquisition apparatus 10. For example, the user may select, as an application example, anthocyanin, which may be a nutrient of the objects. In addition, the user may set one or more regions of interest and/or points of interest (e.g., first region of interest 301 and second region of interest 302) by using the UI or the like, when the user wants to know the content of anthocyanin at the first and second regions of interest 301 and 302.

Referring to FIG. 17, the mobile device 300 may display, on the display 1012, an output image in which the reference image is combined with specific information.

Referring to FIGS. 16 and 17, the mobile device 300 may provide information on the output image to indicate the content of anthocyanin at the first region of interest 301 (e.g., 80) and the content of anthocyanin at the second region of interest 302 (e.g., 45). The user may obtain information from the output image indicating that a yellow tomato containing the first region of interest 301 has a larger anthocyanin content than a red tomato containing the second region of interest 302. Therefore, according to an embodiment, the user may use the mobile device 300 to receive information about the composition and/or state of a product before purchasing and/or selecting the product.

It may be understood that embodiments described herein may be considered in a descriptive sense only and not for purposes of limitation. Descriptions of features or aspects within each embodiment may typically be considered as available for other similar features and/or aspects in other embodiments. While one or more embodiments have been described with reference to the figures, it may be understood by those of ordinary skill in the art that various changes in form and details may be made therein without departing from the scope as defined by the following claims.

## Claims

1. A method of operating an apparatus that comprises a multispectral sensor (100) configured to sense light reflected from an object, one or more processors (200), and a memory storing instructions that, when executed by the one or more processors (200), cause the apparatus to acquire images, the method comprising the steps of:

   generating (S910) N channel images based on signals obtained from a plurality of channels of the multispectral sensor (100), N being a positive integer greater than one;
   selecting at least one first channel image corresponding to a visible wavelength band from among the N channel images;
   generating (S920) a reference image based on the at least one first channel image;
   selecting (S930) a second channel image from remaining channel images of the N channel images, the remaining channel images corresponding to remaining channels of the plurality of channels of the multispectral sensor (100) distinct from first channels corresponding to the at least one first channel image, wherein the selection of the second channel image is performed based on an application example of the object for analyzing characteristics of the object, including chemical and/or physiological state derived from the spectral data on the object;

generating object information by analyzing the second channel image;

extracting an edge image from the second channel image using an edge detection filter;

adding the edge image to the object information;

combining the reference image and the object information to generate an output image; and

displaying the output image to a user.

2. The method of claim 1, wherein the at least one first channel image comprises a channel-R image, a channel-G image, and a channel-B image.

3. The method of claim 1 or 2 further comprising generating the object information based on pixel values of at least one region of interest of the second channel image.

4. The method of claim 3 further comprising:

generating the object information based on an average value of the pixel values of the at least one region of interest, or

normalizing the pixel values of the at least one region of interest with respect to pixel values of the second channel image.

5. The method of claim 1, wherein the edge image and the reference image are combined by performing at least one of:

adding the edge image to the reference image; and

subtracting the edge image from the reference image.

6. The method of one of claims 1 to 5 further comprising generating the N channel images by demosaicing the signals obtained from the plurality of channels of the multispectral sensor (100).

7. An electronic device for acquiring images, the electronic device comprising:

a multispectral sensor (100) configured to sense light reflected from an object;

an input unit configured to receive a user input;

a display;

a processor (200) configured to generate and display an output image on the display based on a multispectral signal received from the multispectral sensor (100) and an input signal received from the input unit; and

a memory storing instructions that, when executed by the processor (200), cause the electronic device to:

generate (S910) N channel images based on the multispectral signal obtained from a plurality of channels of the multispectral sensor (100), N being a positive integer greater than one;

select at least one first channel image corresponding to a visible wavelength band from among the N channel images;

generate (S920) a reference image based on the at least one first channel image; select (S930) a second channel image from remaining channel images of the N channel images, the remaining channel images corresponding to remaining channels of the plurality of channels of the multispectral sensor (100) distinct from first channels corresponding to the at least one first channel image, wherein the instructions, when executed by the processor (200), further cause the electronic device to select the second channel image based on an application example of the object for analyzing characteristics of the object, including chemical and/or physiological state derived from the spectral data on the object;

generate object information by analyzing the second channel image;

extract an edge image from the second channel image using an edge detection filter;

add the edge image to the object information; and

generate (S940) the output image by combining the reference image with the object information.

8. The electronic device of claim 7, wherein the at least one first channel image comprises a channel-R image, a channel-G image, and a channel-B image.

9. The electronic device of claim 7 or 8, wherein the instructions, when executed by the processor (200), further cause the electronic device to:

set at least one region of interest of the second channel image, based on the input signal received from the input unit; and
generate the object information based on pixel values of the at least one region of interest of the second channel image.

10. The electronic device of claim 9, wherein the instructions, when executed by the processor (200), further cause the electronic device to:

generate the object information based on an average value of the pixel values of the at least one region of interest, or
normalize the pixel values of the at least one region of interest with respect to pixel values of the second channel image.

11. The electronic device of one of claims 7 to 10, wherein the edge image and the reference image are combined by performing at least one of:

adding the edge image to the reference image; and
subtracting the edge image from the reference image.

12. The electronic device of one of claims 7 to 11, wherein the instructions, when executed by the processor (200), further cause the electronic device to:

select the second channel image based on the input signal received from the input unit, or
generate the N channel images by demosaicing the multispectral signal obtained from the plurality of channels of the multispectral sensor (100).

13. The electronic device of one of claims 7 to 12, wherein the object information comprises information about at least one ingredient comprised in the object.

14. The electronic device of one of claims 7 to 13, wherein the input unit is disposed on the display, and
wherein the input unit is further configured to receive a touch input generated by a user on the display displaying the output image.

## Patentansprüche

1. Verfahren zum Betreiben einer Vorrichtung, die einen Multispektralsensor (100), ausgebildet zum Erfassen von von einem Objekt reflektiertem Licht, einen oder mehrere Prozessoren (200) und einen Speicher, der Anweisungen speichert, die, wenn vom einen oder von den mehreren Prozessoren (200) ausgeführt, die Vorrichtung veranlassen, Bilder zu erfassen, umfasst, wobei das Verfahren die Schritte umfasst zum:

Erzeugen (S910) von N Kanalbildern basierend auf Signalen, die von einer Vielzahl von Kanälen des Multispektralsensors (100) erhalten werden, wobei N eine positive Ganzzahl größer als eins ist;
Auswählen wenigstens eines ersten Kanalbildes entsprechend einem sichtbaren Wellenlängenband aus den N Kanalbildern;
Erzeugen (S920) eines Referenzbildes basierend auf dem wenigstens einen ersten Kanalbild;
Auswählen (S930) eines zweiten Kanalbildes aus verbleibenden Kanalbildern der N Kanalbilder, wobei die verbleibenden Kanalbilder verbleibenden Kanälen der Vielzahl von Kanälen des Multispektralsensors (100) entsprechen, die sich von ersten Kanälen unterscheiden, die dem wenigstens einen ersten Kanalbild entsprechen, wobei das Auswählen des zweiten Kanalbildes basierend auf einem Anwendungsbeispiel des Objekts zum Analysieren von Eigenschaften des Objekts, einschließlich des chemischen und/oder physiologischen Zustands, die aus den Spektraldaten des Objekts abgeleitet werden, durchgeführt wird;
Erzeugen von Objektinformationen durch Analysieren des zweiten Kanalbildes;
Extrahieren eines Kantenbildes aus dem zweiten Kanalbild unter Verwendung eines Kantenerfassungsfilters;
Addieren des Kantenbildes zu den Objektinformationen;
Kombinieren des Referenzbildes und der Objektinformationen zum Erzeugen eines Ausgabebildes; und

Anzeigen des Ausgabebildes für einen Benutzer.

2. Verfahren nach Anspruch 1, wobei das wenigstens eine erste Kanalbild ein Kanal-R-Bild, ein Kanal-G-Bild und ein Kanal-B-Bild umfasst.

3. Verfahren nach Anspruch 1 oder 2, ferner umfassend das Erzeugen der Objektinformationen basierend auf Pixelwerten des wenigstens eines interessierenden Bereichs des zweiten Kanalbildes.

4. Verfahren nach Anspruch 3, ferner umfassend:

   Erzeugen der Objektinformationen basierend auf einem Durchschnittswert der Pixelwerte des wenigstens einen interessierenden Bereichs, oder
   Normalisieren der Pixelwerte des wenigstens einen interessierenden Bereichs in Bezug auf Pixelwerte des zweiten Kanalbildes.

5. Verfahren nach Anspruch 1, wobei das Kantenbild und das Referenzbild kombiniert werden durch Durchführen von:

   Addieren des Kantenbildes zum Referenzbild; oder/und
   Subtrahieren des Kantenbildes vom Referenzbild.

6. Verfahren nach einem der Ansprüche 1 bis 5, ferner umfassend das Erzeugen der N Kanalbilder durch Interpolation der von der Vielzahl von Kanälen des Multispektralsensors (100) erhaltenen Signale.

7. Elektronische Vorrichtung zum Erfassen von Bildern, wobei die elektronische Vorrichtung umfasst:

   einen Multispektralsensor (100), ausgebildet zum Erfassen von von einem Objekt reflektiertem Licht;
   eine Eingabeeinheit, ausgebildet zum Empfangen einer Benutzereingabe;
   eine Anzeige;
   einen Prozessor (200), ausgebildet zum Erzeugen und Anzeigen eines Ausgabebildes auf der Anzeige basierend auf einem vom Multispektralsensor (100) empfangenen Multispektralsignal und einem von der Eingabeeinheit empfangenen Eingangssignal; und
   einen Speicher zum Speichern von Anweisungen, die, wenn vom Prozessor (200) ausgeführt, die elektronische Vorrichtung veranlassen zum:

      Erzeugen (S910) von N Kanalbildern basierend auf dem Multispektralsignal, das von einer Vielzahl von Kanälen des Multispektralsensors (100) erhalten wird, wobei N eine positive Ganzzahl größer als eins ist;
      Auswählen wenigstens eines ersten Kanalbildes entsprechend einem sichtbaren Wellenlängenband aus den N Kanalbildern;
      Erzeugen (S920) eines Referenzbildes basierend auf dem wenigstens einen ersten Kanalbild;
      Auswählen (S930) eines zweiten Kanalbildes aus verbleibenden Kanalbildern der N Kanalbilder, wobei die verbleibenden Kanalbilder verbleibenden Kanälen der Vielzahl von Kanälen des Multispektralsensors (100) entsprechen, die sich von ersten Kanälen unterscheiden, die dem wenigstens einen ersten Kanalbild entsprechen, wobei die Anweisungen, wenn vom Prozessor (200) ausgeführt, die elektronische Vorrichtung ferner zum Auswählen des zweiten Kanalbildes basierend auf einem Anwendungsbeispiel des Objekts zum Analysieren von Eigenschaften des Objekts, einschließlich des chemischen und/oder physiologischen Zustands, die aus den Spektraldaten des Objekts abgeleitet werden, veranlassen;
      Erzeugen von Objektinformationen durch Analysieren des zweiten Kanalbildes;
      Extrahieren eines Kantenbildes aus dem zweiten Kanalbild unter Verwendung eines Kantenerfassungsfilters;
      Addieren des Kantenbildes zu den Objektinformationen; und
      Erzeugen (S940) des Ausgabebildes durch Kombinieren des Referenzbildes mit den Objektinformationen.

8. Elektronische Vorrichtung nach Anspruch 7, wobei das wenigstens eine erste Kanalbild ein Kanal-R-Bild, ein Kanal-G-Bild und ein Kanal-B-Bild umfasst.

9. Elektronische Vorrichtung nach Anspruch 7 oder 8, wobei die Anweisungen, wenn vom Prozessor (200) ausgeführt, ferner die elektronische Vorrichtung veranlassen zum:

Festlegen von wenigstens einem interessierenden Bereich des zweiten Kanalbildes basierend auf dem von der Eingabeeinheit empfangenen Eingangssignal; und
Erzeugen der Objektinformationen basierend auf Pixelwerten des wenigstens eines interessierenden Bereichs des zweiten Kanalbildes.

10. Elektronische Vorrichtung nach Anspruch 9, wobei die Anweisungen, wenn vom Prozessor (200) ausgeführt, ferner die elektronische Vorrichtung veranlassen zum:

Erzeugen der Objektinformationen basierend auf einem Durchschnittswert der Pixelwerte des wenigstens einen interessierenden Bereichs, oder
Normalisieren der Pixelwerte des wenigstens einen interessierenden Bereichs in Bezug auf Pixelwerte des zweiten Kanalbildes.

11. Elektronische Vorrichtung nach einem der Ansprüche 7 bis 10, wobei das Kantenbild und das Referenzbild kombiniert werden durch Durchführen von:

Addieren des Kantenbildes zum Referenzbild; oder/und
Subtrahieren des Kantenbildes vom Referenzbild.

12. Elektronische Vorrichtung nach einem der Ansprüche 7 bis 11, wobei die Anweisungen, wenn vom Prozessor (200) ausgeführt, ferner die elektronische Vorrichtung veranlassen zum:

Auswählen des zweiten Kanalbildes basierend auf dem von der Eingabeeinheit empfangenen Eingangssignal, oder
Erzeugen der N Kanalbilder durch Interpolation der von der Vielzahl von Kanälen des Multispektralsensors (100) erhaltenen Multispektralsignale.

13. Elektronische Vorrichtung nach einem der Ansprüche 7 bis 12, wobei die Objektinformationen Informationen über wenigstens einen im Objekt enthaltenen Bestandteil umfasst.

14. Elektronische Vorrichtung nach einem der Ansprüche 7 bis 13, wobei die Eingabeeinheit auf der Anzeige angeordnet ist, und
wobei die Eingabeeinheit ferner zum Empfangen einer Touch-Eingabe ausgebildet ist, die von einem Benutzer auf der Anzeige, die das Ausgabebild anzeigt, erzeugt wird.

**Revendications**

1. Procédé d'utilisation d'un appareil comprenant un capteur multispectral (100) configuré pour détecter la lumière réfléchie par un objet, un ou plusieurs processeurs (200), et une mémoire dans laquelle sont stockées des instructions qui, quand elles sont exécutées par lesdits un ou plusieurs processeurs (200), commandent à l'appareil d'acquérir des images, le procédé comprenant les étapes suivantes :

génération (S910) de N images de canal sur la base de signaux obtenus à partir d'une pluralité de canaux du capteur multispectral (100), N étant un nombre entier positif supérieur à un ;
sélection d'au moins une première image de canal correspondant à une bande de longueur d'onde visible parmi les N images de canal ;
génération (S920) d'une image de référence sur la base de ladite au moins une première image de canal ;
sélection (S930) d'une deuxième image de canal parmi les images de canal restantes des N images de canal, les images de canal restantes correspondant aux canaux restants de la pluralité de canaux du capteur multispectral (100) distincts des premiers canaux correspondant à ladite au moins une première image de canal, dans lequel la sélection de la deuxième image de canal est effectuée sur la base d'un exemple d'application de l'objet pour analyser les caractéristiques de l'objet, incluant l'état chimique et/ou physiologique dérivé des données spectrales sur l'objet ;
génération d'information sur l'objet en analysant la deuxième image de canal ;
extraction d'une image de contour à partir de la deuxième image de canal en utilisant un filtre de détection de contour ;
ajout de l'image de contour à l'information sur l'objet ;

combinaison de l'image de référence et de l'information sur l'objet pour générer une image de sortie ; et affichage de l'image de sortie à l'utilisateur.

2. Procédé selon la revendication 1, dans lequel ladite au moins une première image de canal comprend une image de canal R, une image de canal G et une image de canal B.

3. Procédé selon la revendication 1 ou 2, comprenant en outre la génération de l'information sur l'objet sur la base des valeurs de pixel d'au moins une région d'intérêt de la deuxième image de canal.

4. Procédé selon la revendication 3, comprenant en outre :

la génération de l'information sur l'objet sur la base d'une valeur moyenne des valeurs de pixel de ladite au moins une région d'intérêt, ou
la normalisation des valeurs de pixel de ladite au moins une région d'intérêt par rapport aux valeurs de pixel de la deuxième image de canal.

5. Procédé selon la revendication 1, dans lequel l'image de contour et l'image de référence sont combinées en effectuant au moins une opération parmi :

l'ajout de l'image de contour à l'image de référence ; et
la soustraction de l'image de contour de l'image de référence.

6. Procédé selon l'une des revendications 1 à 5 comprenant en outre la génération des N images de canal par dématriçage des signaux obtenus à partir de la pluralité de canaux du capteur multispectral (100).

7. Dispositif électronique pour l'acquisition d'images, le dispositif électronique comprenant :

un capteur multispectral (100) configuré pour détecter la lumière réfléchie par un objet ;
une unité d'entrée configurée pour recevoir une entrée d'utilisateur ;
un écran ;
un processeur (200) configuré pour générer et afficher une image de sortie sur l'écran sur la base d'un signal multispectral reçu du capteur multispectral (100) et d'un signal d'entrée reçu de l'unité d'entrée ; et
une mémoire dans laquelle sont stockées des instructions qui, quand elles sont exécutées par le processeur (200),
commandent au dispositif électronique de :

générer (S910) N images de canal sur la base du signal multispectral obtenu à partir d'une pluralité de canaux du capteur multispectral (100), N étant un nombre entier positif supérieur à un ;
sélectionner au moins une première image de canal correspondant à une bande de longueur d'onde visible parmi les N images de canal ;
générer (S920) une image de référence sur la base de ladite au moins une première image de canal ;
sélectionner (S930) une deuxième image de canal parmi les images de canal restantes des N images de canal, les images de canal restantes correspondant aux canaux restants de la pluralité de canaux du capteur multispectral (100) distincts des premiers canaux correspondant à ladite au moins une première image de canal, dans lequel les instructions, quand elles sont exécutées par le processeur (200), commandent en outre au dispositif électronique de sélectionner la deuxième image de canal sur la base d'un exemple d'application de l'objet pour analyser les caractéristiques de l'objet, incluant l'état chimique et/ou physiologique dérivé des données spectrales sur l'objet ;
générer de l'information sur l'objet en analysant la deuxième image de canal ;
extraire une image de contour de la deuxième image de canal en utilisant un filtre de détection de contour ;
ajouter l'image de contour à l'information sur l'objet ; et
générer (S940) l'image de sortie en combinant l'image de référence avec l'information sur l'objet.

8. Dispositif électronique selon la revendication 7, dans lequel ladite au moins une première image de canal comprend une image de canal R, une image de canal G et une image de canal B.

9. Dispositif électronique selon la revendication 7 ou 8, dans lequel les instructions, quand elles sont exécutées par le processeur (200), commandent en outre au dispositif électronique de :

définir au moins une région d'intérêt de la deuxième image de canal, sur la base du signal d'entrée reçu de l'unité d'entrée ; et

générer l'information sur l'objet sur la base de valeurs de pixel de ladite au moins une région d'intérêt de la deuxième image de canal.

10. Dispositif électronique selon la revendication 9, dans lequel les instructions, quand elles sont exécutées par le processeur (200), commandent en outre au dispositif électronique de :

générer l'information sur l'objet sur la base d'une valeur moyenne des valeurs de pixel de ladite au moins une région d'intérêt, ou

normaliser les valeurs de pixel de ladite au moins une région d'intérêt par rapport aux valeurs de pixel de la deuxième image de canal.

11. Dispositif électronique selon l'une des revendications 7 à 10, dans lequel l'image de contour et l'image de référence sont combinées en effectuant au moins une opération parmi :

l'ajout de l'image de contour à l'image de référence ; et
la soustraction de l'image de contour de l'image de référence.

12. Dispositif électronique selon l'une des revendications 7 à 11, dans lequel les instructions, quand elles sont exécutées par le processeur (200), commandent en outre au dispositif électronique de :

sélectionner la deuxième image de canal sur la base du signal d'entrée reçu de l'unité d'entrée, ou
générer les N images de canal en dématriçant le signal multispectral obtenu à partir de la pluralité de canaux du capteur multispectral (100).

13. Dispositif électronique selon l'une des revendications 7 à 12, dans lequel l'information sur l'objet comprend de l'information sur au moins un ingrédient contenu dans l'objet.

14. Dispositif électronique selon l'une des revendications 7 à 13,

dans lequel l'unité d'entrée est disposée sur l'écran, et
dans lequel l'unité d'entrée est en outre configurée pour recevoir une entrée tactile générée par un utilisateur sur l'écran affichant l'image de sortie.

# FIG. 1

# FIG. 2

# FIG. 3

10

100

200

MULTISPECTRAL
SENSOR

PROCESSOR

# FIG. 4

FIG. 5

# FIG. 6

300nm                                                                          1000nm

# FIG. 7

**FIG. 8**

# FIG. 9

```
                    ┌─────────────┐
                    │    START    │
                    └──────┬──────┘
                           │
           ┌───────────────▼───────────────┐
           │   GENERATE N CHANNEL IMAGES    │──── S910
           └───────────────┬───────────────┘
                           │
           ┌───────────────▼───────────────┐
           │    GENERATE REFERENCE IMAGE    │──── S920
           └───────────────┬───────────────┘
                           │
           ┌───────────────▼───────────────┐
           │ SELECT CHANNEL IMAGE AND GENERATE │
           │  SPECIFIC INFORMATION BY ANALYZING │──── S930
           │     SELECTED CHANNEL IMAGE      │
           └───────────────┬───────────────┘
                           │
           ┌───────────────▼───────────────┐
           │ GENERATE OUTPUT IMAGE BY COMBINING │
           │   REFERENCE IMAGE AND SPECIFIC  │──── S940
           │   INFORMATION WITH EACH OTHER   │
           └───────────────┬───────────────┘
                           │
                    ┌──────▼──────┐
                    │     END     │
                    └─────────────┘
```

# FIG. 10

ED00

ELECTRONIC DEVICE — ED01

ED30

**MEMORY**

VOLATILE MEMORY — ED32

NONVOLATILE MEMORY — ED34

INTERNAL MEMORY — ED36

EXTERNAL MEMORY — ED38

ED40

**PROGRAM**

APPLICATION — ED46

MIDDLEWARE — ED44

OPERATING SYSTEM — ED42

ED50 — INPUT DEVICE

ED60 — DISPLAY DEVICE

ED55 — AUDIO OUTPUT DEVICE

ED89 — BATTERY

ED88 — POWER MANAGEMENT MODULE

ED20 — PROCESSOR

ED21 — MAIN PROCESSOR

ED23 — AUXILIARY PROCESSOR

COMMUNICATION MODULE — ED90

WIRELESS COMMUNICATION MODULE — ED92

WIRED COMMUNICATION MODULE — ED94

ED96 — SUBSCRIBER IDENTIFICATION MODULE

ED97 — ANTENNA MODULE

ED99 — NETWORK

ED04 — ELECTRONIC DEVICE

ED98

ED02 — ELECTRONIC DEVICE

ED08 — SERVER

ED70 — AUDIO MODULE

ED76 — SENSOR MODULE

ED77 — INTERFACE

ED78 — CONNECTION TERMINAL

ED79 — HAPTIC MODULE

ED80 — CAMERA MODULE

EP 4 524 879 B1

# FIG. 11

ED80

| | | |
|---|---|---|
| CM20<br>**FLASH** | CM60 | |
| CM10<br>LENS<br>ASSEMBLY | CM30<br>**IMAGE SENSOR** | **IMAGE SIGNAL<br>PROCESSOR** |
| | CM40<br>**IMAGE STABILIZER** | |
| | CM50<br>**MEMORY** | |

# FIG. 12

5100m

(a)

5200

(b)

5300

(c)

5400

(d)

5500

(e)

# FIG. 13

5600

5700

[Security]

(a)

(b)

5800

5900

(c)

(d)

6020

6000

6010

6030

6040

(e)

# FIG. 14

# FIG. 15

300

100

1011

# FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020396397 A1

- US 2019370586 A1